# EUROPÄISCHE PATENTSCHRIFT

(11) **EP 0 334 075 B1**
(45) Veröffentlichungstag und Bekanntmachung des Hinweises auf die Patenterteilung: **12.07.1995**
(21) Anmeldenummer: 89103727.7
(22) Anmeldetag: 03.03.1989
(51) Int. Cl.: B43L 19/00, C08L 53/00

(54) **Radiergummi**
Rubber
Gomme à effacer

(30) Priorität: 24.03.1988 DE 3810027
(43) Veröffentlichungstag der Anmeldung: 27.09.1989
(73) Patentinhaber: Pelikan GmbH, 30177 Hannover (DE)
(72) Erfinder: Weissmann, Karl-Heinz, D-3000 Hannover 1 (DE); Schmidt, Fritz, D-8264 Waldkraiburg (DE); Krüger, Dieter, D-8261 Kraiburg (DE)
(74) Vertreter: Hagemann, Heinrich, Dr.rer.nat., Dipl.-Chem.

(56) Entgegenhaltungen:
- DE-A- 3 005 332
- Encyclopedia of Polymer Science and Engineering, volume 2, John Wiley & Sons, New York (1985), Seite 398 bis 400.

## Beschreibung

Die Erfindung betrifft einen Radiergummi mit einem Gehalt an einem Styrol-Block-Copolymeren, Füllstoffen sowie gegebenenfalls weiteren Zusätzen.

Radiergummis der oben beschriebenen Art sind beispielsweise aus der DE-A 30 05 298 bekannt. Sie sollen aus Füllstoffen, einem Block-Copolymeren auf-Basis von Styrol und einem konjugierten Dien als Bindemittel sowie gegebenenfalls weiteren Zusätzen bestehen, wobei das Block-Copolymer ein Styol-Isopren-Styrol-Block-Copolymer ist. Vorzugsweise wird in die Radiergummimasse ein Polyolefin eingearbeitet. Herbei handelt es sich um ein spezifisches, flüssiges, niedrigviskoses Polybutadien. Radiergummis dieser Art sollen insbesondere weich und elastisch und vor allem gut abreibbar sein. Es hat sich jedoch gezeigt, daß sie im Hinblick auf verschiedene Beständigkeitsanforderungen nicht zufriedenstellen. So ist die Altetungsbeständigkeit, die Lichtbeständigkeit und die Temperaturstabilität verbesserungsbedürftig.

Aus "Encyclopedia of Polymer Science and Engineering", Band 2, Seiten 398 bis 400, sind hydrogenierte Styrol-Block-Copolymeren, wie Styrol-(Ethylen/Butylen)-Styrol-Block-Copolymeren bekannt. Diese Styrol-Block-Copolymeren "der zweiten Generation" sind oxidations- und vorzüglich wetterbeständig. Sie haben eine vorzügliche Beständigkeit gegen Sauerstoff, Ozon und UV-Licht.

Der Erfindung lag die Aufgabe zugrunde, den eingangs bezeichneten Radiergummi so weiterzubilden, daß die vorstehend angesprochenen Mängel behoben werden, insbesondere die thermoplastischen Fließeigenschaften der Radiererausgangsmischung verbessert und der Radierer vorzügliche Abriebwerte aufweist.

Erfindungsgemäß wird diese Aufgabe durch einen Radiergummi mit einem Gehalt an einem Styrol-Block-Copolymeren, an Füllstoffen sowie ggf. an weiteren Zusätzen gelöst, wobei der Radiergummi als Styrol-Block-Copolymerisat 5 bis 35 Gew.-% eines Styrol-Butylen/Ethylen-Styrol-Block-Copolymerisats, ein thermoplastisches Polyolefin sowie ein Mineralöl enthält und das thermoplastische Polyolefin in einer Menge von 3 bis 7 Gew.-% vorhanden ist.

Ein wesentliches Merkmal der Erfindung besteht demzufolge darin, daß in den erfindungsgemäß einzusetzenden Block-Copolymeren keine freie Doppelbindung mehr enthalten ist, wie beispielsweise in Form einpolymerisierten Isoprens des bekannten Styrol-Isopren-Styrol-Block-copolymers. Der

Ersatz des Isoprens, das bei seiner Einpolymerisation in das Block-Copolymer eine noch reaktionsfähige Doppelbindung beläßt und damit Sauerstoff anlagern kann (Römpps Chemie-Lexikon, 8. Aufl., 1983, S. 2065), durch Polyolefine wie Ethylen, Propylen, Butylen und Isobutylen, führt zu einer Verbesserung der Alterungs- und Lichtbeständigkeit und der thermischen Stabilität sowie zu einer Erhöhung des gummielastischen Verhaltens des gesamtes Block-Copolymers.

Styrol-Block-Copolymere, die im Rahmen der Erfindung mit Erfolg einsetzbar sind, sind im Handel erhältlich, so die unter der Handelsbezeichnung "Kraton" von der Shell Chemical Company vertriebenen Erzeugnisse. Besonders vorteilhaft haben sich dabei die Handelserzeugnisse "Kraton^{R} G-1651, Kraton G-1650 und Kraton^{R} G-1652" erwiesen (sh. Firmenprospekt der Shell Chemical Company "Kraton, Thermoplastich Rubber", gedruckt in den USA 10/85 5M). Die Handelsprodukte Kraton^{R} G-1650, 1651 und 1652 weisen unterschiedliche Molekulargewichte auf und unterscheiden sich in ihrem Verhältnis Styrol/elastischer Mittelblock. Eine Aussage über das Molekulargewicht macht die Viskosität. Nach dem oben genannten Firmenprospekt wird hierbei die Brookfield-Viskosität (20 %ige Lösung in Toluol) in cps bei 25°C herangezogen. Danach ergeben sich für die drei genannten Produkte folgende Werte: 1.500 (G-1650), 2.000 (G-1651) und 550 (G-1652). Das jeweilige Styrol/elastischer Mittelblock-Verhältnis beträgt entsprechend der genannten Reihenfolge 28/72, 33/67 und 29/71. Für den Fachmann ist es ohne weiteres ersichtlich, daß die oben bezeichneten Viskositätswerte und die Verhältnis-Werte Styrol zu Mittelblock mehr oder weniger weit unter- bzw. überschritten werden können.

Die Styrol-Block-Copolymere sind in dem erfindungsgemäßen Radiergummi vorzugsweise in einer Menge von 5 bis 35 Gew.-%, insbesondere 15 bis 25 Gew.-% enthalten. Die Grenzmengen können im Einzelfall mehr oder weniger unter- bzw. überschritten werden.

Dem erfindungsgemäßen Radiergummi können vielfältige Zusätze einverleibt werden, so Füllstoffe, Mittel zur Verbesserung der thermoplastischen Fließeigenschaften, Abriebhilfsmittel, wie Faktisse, Antioxidantien, Farbmittel, fluoroszierende Substanzen, Duftstoffe und dergleichen. Die wichtigsten dieser Zusätze sollen nachfolgend beschrieben werden.

Der erfindungsgemäße Radiergummi muß Füllstoffe enthalten. Die Wahl des Füllstoffs ist nicht kritisch. Vielmehr kommt eine Vielzahl unterschiedlichster Füllstoffe in Frage, so beispielsweise Calciumcarbonat, Kaolin, Talkum, Bimssteinmehl, Kieselsäure, Quarz- und Glasmehl und dergleichen. Diese Füllstoffe haben auch einen Einfluß auf verschiedene Eigenschaften des Radiergummis, so auf die Festigkeit, das Abriebverhalten, die Shore-Härte A und die Radiereigenschaften. Die Mengenanteile der Füllstoffe in dem erfindungsgemäßen Radiergummi können, in Abhänigkeit von den jeweils gewünschten besonderen Eigenschaften, relativ weiten Schwankungen unterliegen. Als grobe Richtlinie kann ein Bereich von 30 bis 70 Gew.-%, insbesondere von 40 bis 60 Gew.-% angegeben werden.

Bei der Herstellung des erfindungsgemäßen Radiergummis werden den Ausgangsmaterialien Mittel zur Verbesserung der thermoplastischen Fließeigenschaften in Form eines thermoplastischen Polyolefins und eines geeigneten Mineralöls einverleibt. Das thermoplastische Polyolefin liegt in einer Menge von 3 bis 7 Gew.-% vor. Dabei kann es sich um Polyethylen, Polypropylen und Polyisobutylen handeln. Bei der Auswahl der vorteilhafterweise im Rahmen der Erfindung eingesetzten Polyethylene unterliegt man keinen wesentlichen Beschränkungen. Es lassen sich sowohl Polyethylene niedriger Dichte als auch hoher Dichte verwenden, so die unter der Abkürzung HDPE und LDPE bekannten Erzeugnisse, wobei diese eine Dichte von etwa 0,95 bzw. 0,91 g/cm³ aufweisen. Als zusätzliche Mittel zur Verbesserung der thermoplastischen Fließeigenschaften der Ausgangsmaterialien kommen äußere Weichmacher, beispielsweise die Ester der Dicarbonsäuren, wie der Phthalsäure, Adipin- und Sebazinsäure, der Phosphorsäuren, der Fettsäuren und der Zitronensäure in Frage (vgl. Römpps, Chemie-Lexikon, 7. Aufl., Bd. 6, 1977, S. 3894/3895). Als Mineralöle kommen insbesondere besonders gereinigte Mineralöle, die auch unter dem Namen "Weißöle" gehandelt werden (vgl. Römpps Chemie-Lexikon, a.a.O., S. 3899) in Betracht. Die erwähnten äußeren Weichmacher und auch die Mineralöle werden vorzugsweise in einer Menge bis zu 30 Gew.-%, insbesondere von 15 bis 25 Gew.-% eingesetzt.

Alternativ und ergänzend kann zur Verbesserung des Abriebs und somit der Radiereigenschaften auch vorteilhafterweise ein Faktis (chlorier-schwefel-vernetztes pflanzliches Öl) in geringen Mengen hinzugegeben werden, wobei ein Chlorschwefelrüböl besonders geeignet ist (vgl. Römpps Chemie-Lexikon, Bd. 2, 8. Aufl., 1981, S. 1234). Grundsätzlich können auch schwefelfreie Faktisse herangezogen werden. Der Faktis-Anteil kann in einem großen Bereich schwanken, so zwischen 5 und 30 Gew.-% der gesamten Masse des Radierers.

Der Einfärbung des erfindungsgemäßen Radierers können verschiedene Farbmittel dienen, so beispielsweise Titandioxid und zur Einfärbung von Polyolefinen geeignete Farbpräparationen, wie Remafin-Compounds der Firma Hoechst AG.

Durch die Verwendung der oben genannten Mittel zur Verbesserung des thermoplastischen Fließverhaltens läßt sich der Radiergummi anhand einfacher Maßnahmen herstellen, so durch Extrudieren und im Spritzgußverfahren oder in ähnlicher Weise, ohne daß somit übliche Nachbehandlungen, wie beispielsweise durch Vukanisation, erforderlich wären. Bei der Verarbeitung haben die Ausgangsmaterialien des erfindungsgemäßen Radiergummis plastischen Charakter, während sie nach dem Abkühlen elastische Eigenschaften haben.

Neben den angesprochenen Fertigungsvorteilen, die mit dem erfindungsgemäßen Radiergummi verbunden sind, zeichnet sich dieser noch durch besonders vorteilhafte Eigenschaften aus, so durch gute Alterungsbeständigkeit, Lichtbeständigkeit und hohe thermische Stabilität. Auch erweist es sich von Vorteil, daß der Fertigungsausschuß ohne weiteres dem Herstellungsprozeß wieder zugeführt werden kann.

Die vorteilhaften Eigenschaften des erfindungsgemäßen Radiergummis gehen bei den eingesetzten Styrol-Ethylen/Butylen-Styrol-Block-Copolymeren auf deren charakteristische Molekularstruktur zurück. Die Moleküle bestehen aus thermoplastischen Polystyrol-Endblöcken (S) und einem elastischen Ethylen-Butylen-Mittelblock (EB). Beim Abkühlen des verarbeiteten Materials bilden sich Polystyrol-Domänen. Sie sind die physikalischen Vernetzungsstellen, die die elastischen Ethylen-Butylen-Blöcke zu einem festen räumlichen Netzwerk verbinden. Diese Verknüpfungen verleihen dem Produkt die mit chemisch-vernetzten Produkten vergleichbaren guten visko-elastischen Eigenschaften. Auch kann die physikalische Vernetzung dieses Produktes durch Erhitzen in Verbindung mit Scherkräften wieder rückgängig gemacht werden. Abfallteile können so problemlos wieder verwertet werden, ohne daß eine Beeinträchtigung des mechanischen Werteniveaus oder der Materialbestädigkeit gegenüber Kontaktmedien eintritt.

Nachfolgend soll die Erfindung anhand verschiedener Beispiele noch näher erläutert werden:

### Beispiele

Bei den verschiedenen Beispielen wurden die aus der nachfolgenden Tabelle I ersichtlichen Rezepturen herangezogen:

**Tablelle I**

| Beispiele | 1 | 2 | 3 | 4 | 5 | 6 |
|---|---|---|---|---|---|---|
| Kraton^{R} G-1651 | 100 | 100 | --- | --- | --- | --- |
| Kraton^{R} G-1650 | --- | --- | --- | --- | 100 | --- |
| Kraton^{R} G-1652 | --- | --- | 100 | 100 | --- | 100 |
| Faktis | 10 | 100 | --- | --- | --- | --- |
| HDPE | 35 | 35 | 35 | 20 | --- | 25 |
| Weißöl (DAB 9) | 90 | 90 | 100 | 100 | 100 | 100 |
| CaCO₃ | 250 | 250 | 250 | 200 | 150 | 250 |
| LDPE | --- | --- | --- | --- | 20 | --- |
| In obiger Tabelle bedeuten: Kraton^{R} G 1651: Brookfield-Viskosität (in 20 %iger Toluollösung / cps 2.000 bei 25°C, Verhältnis Styrol/elastischer Mittelblock 33/67) Kraton^{R} G 1650: Brookfield-Viskosität (in 20 %iger Toluollösung / cps 1.500 bei 25°C, Verhältnis Styrol/elastischer Mittelblock 28/72) Kraton^{R} G 1652: Brookfield-Viskosität (in 20 %iger Toluollösung / cps 550 bei 25°C, Verhältnis Styrol/elastischer Mittelblock 29/71) Faktis: Chlor-schwefel vernetztes Rüböl HDPE: Polyethylen hoher Dichte (Dichte = etwa 0,95) DAB 9: deutsches Arzeimittelbuch, 9. Ausgabe LDPE: Polyethylen niedriger Dichte (Dichte = etwa 0,91) | | | | | | |

Die in den obigen Beispielen bezeichneten Ausgangsmaterialien wurden in einem handelsüblichen Mischextruder, der auf etwa 200°C beheizt wurde, innig gemischt. Der austretende Strang wurde in einem Granulator zerkleinert. Das erhaltene Granulat wurde nach dem Spritzgußverfahren bei Temperaturen von 160 bis 180°C zu geformten Radierern weiterverarbeitet. Diese zeigen vorzügliche Abriebwerte. Ihre Shore-Härte-A-Werte bewegen sich zwischen 40 bis 70.

## Patentansprüche

1. Radiergummi mit einem Gehalt an einem Styrol-Block-Copolymeren, an Füllstoffen sowie gegebenenfalls an weiteren Zusätzen, wobei er als Styrol-Block-Copolymerisat 5 bis 35 Gew.-% eines Styrol-Butylen/Ethylen-Styrol-Block-Copolymerisats, ein thermoplastisches Polyolefin sowie ein Mineralöl enthält und das thermoplastische Polyolefin in einer Menge von 3 bis 7 Gew.-% vorhanden ist.

2. Radiergummi nach Anspruch 1, dadurch gekennzeichnet, daß er 15 bis 25 Gew.-% Styrol-Butylen/Ethylen-Styrol-Block-Copolymerisat enthält.

3. Radiergummi nach Anspruch 1 oder 2, dadurch gekennzeichnet, daß er zusätzlich einen äußeren Weichmacher enthält.

4. Radiergummi nach Anspruch 3, dadurch gekennzeichnet, daß er 15 bis 25 Gew.-% Weichmacher und/oder Mineralöl enthält.

5. Radiergummi nach einem der vorhergehenden Ansprüche, dadurch gekennzeichnet, daß das Polyolefin Polyethylen, Polypropylen oder Polyisobutylen ist.

6. Radiergummi nach mindestens einem der vorhergehenden Ansprüche, dadurch gekennzeichnet, daß er einen Faktis enthält.

7. Radiergummi nach Anspruch 6, dadurch gekennzeichnet, daß er 2 bis 25 Gew.-% Faktis enthält.

## Claims

1. A rubber eraser containing a styrene block copolymer, fillers and, where necessary, further additives, the eraser comprising 5 to 35 per cent by weight of a styrene-butylene/ethylene-styrene block copolymer as the styrene block copolymer, a thermoplastic polyolefin and a mineral oil, with the thermoplastic polyolefin being present in a concentration of 3 to 7 per cent by weight.

2. A rubber eraser according to claim 1, characterised in that it contains 15 to 25 per cent by weight of a styrene-butylene/ethylene-styrene block copolymer.

3. A rubber eraser according to claim 1 or 2, characterised in that it additionally contains an external plasticizer.

4. A rubber eraser according to claim 3, characterised in that it contains 15 to 25 per cent by weight of plasticizer and/or mineral oil.

5. A rubber eraser according to any one of the preceding claims, characterised in that the polyolefin is polyethylene, polypropylene or polyisobutylene.

6. A rubber eraser according to at least one of the preceding claims, characterised in that it contains a factice.

7. A rubber eraser according to claim 6, characterised in that it contains 2 to 25 per cent by weight of factice.

## Revendications

1. Gomme à effacer composée d'un copolymère en masse de styrène, de charges et éventuellement d'autres additifs, caractérisée en ce qu'elle contient comme copolymérisat en masse styrène de 5 à 35 % en poids d'un copolymérisat en masse de styrène-butylène/éthylène-styrène, d'une huile minérale ainsi que d'une polyoléfine thermoplastique, cette dernière dans la proportion de 3 à 7 % en poids.

2. Gomme à effacer selon la revendication 1, caracterisée en ce qu'elle contient de 15 à 25 % en poids d'un copolymérisat en masse de styrène-butylène/éthylène-styrène.

3. Gomme à effacer selon la revendication 1 ou 2, caractérisée en ce qu'elle contient aussi un plastifiant externe.

4. Gomme à effacer selon la revendication 3, caractérisée en ce qu'elle contient de 15 à 25 % en poids de plastifiant et/ou d'huile minérale.

5. Comme à effacer selon une des revendications précédentes, caractérisée en ce que la polyoléfine est du polyéthylène, du polypropylène ou du polyisobutylène.

6. Comme à effacer selon une des revendications précédentes, caractérisée en ce qu'elle contient un caoutchouc factice.

7. Comme à effacer selon la revendication 6, caractérisée en ce qu'elle contient de 2 à 25 % en poids de caoutchouc factice.
